# EUROPEAN PATENT APPLICATION

(11) **EP 3 934 254 A1**
(43) Date of publication of application: **05.01.2022**
(21) Application number: 21179915.0
(22) Date of filing: 17.06.2021
(51) Int. Cl.: H04N 19/46, G06N 3/04, H04N 19/85

(54) **ENCODING AND DECODING OF EXTRACTED FEATURES FOR USE WITH MACHINES**

(30) Priority: 29.06.2020 FI 20205687
(71) Applicant: Nokia Technologies Oy, 02610 Espoo (FI)
(72) Inventor: CRICRI, Francesco, Tampere (FI); AKSU, Emre Baris, Tampere (FI); LE, Nam Hai, Tampere (FI); REZAZADEGAN TAVAKOLI, Hamed, Espoo (FI); ZHANG, Honglei, Tampere (FI); HANNUKSELA, Miska Matias, Tampere (FI); GHAZNAVI YOUVALARI, Ramin, Tampere (FI)
(74) Representative: Nokia EPO representatives

(57) **Abstract**

Example embodiments relate to encoding and decoding of data for machine learning related applications or other non-human purposes. Feature maps extracted from input data may be adapted such that the features are more suitable for encoding by an encoder. A decoder may obtain the encoded data, reconstruct the input data, and cause execution of a machine based on the reconstructed input data. Apparatuses, methods, and computer programs are disclosed.

## Description

### TECHNICAL FIELD

The present application generally relates to encoding and decoding of data for different types of applications. In particular, some example embodiments of the present application relate to encoding and decoding of extracted features for use with machine learning related applications or other non-human purposes.

### BACKGROUND

Machine learning (ML) or other automated processes may be utilized for different applications in different types of devices, such as for example mobile phones. Example applications include compression and analysis of data, such as for example image data, video data, audio data, speech data, or text data. An encoder may be configured to transform input data into a compressed representation suitable for storage or transmission. A decoder may be configured to reconstruct the data based on the compressed representation. Subsequently a machine, such as for example a neural network (NN), may perform a task based on the reconstructed data.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments improve encoding and decoding for machine learning based tasks or other non-human purposes. This may be achieved by the features of the independent claims. Further implementation forms are provided in the dependent claims, the description, and the drawings.

According to an aspect, an apparatus comprises at least one processor; and at least one memory including computer program code; the at least one memory and the computer program code configured to, with the at least one processor, cause the apparatus at least to: obtain a plurality of feature maps extracted from input data; perform adaptation of the plurality of feature maps to obtain a set of adapted features; and encode the set of adapted features with an encoder.

According to an aspect, a method comprises obtaining a plurality of feature maps extracted from input data; performing adaptation of the plurality of feature maps to obtain a set of adapted features; and encoding the set of adapted features with an encoder.

According to an aspect, a computer program comprises instructions for causing an apparatus to perform at least the following: obtaining a plurality of feature maps extracted from input data; performing adaptation of the plurality of feature maps to obtain a set of adapted features; and encoding the set of adapted features with an encoder.

According to an aspect, an apparatus comprises means for obtaining a plurality of feature maps extracted from input data; means for performing adaptation of the plurality of feature maps to obtain a set of adapted features; and means for encoding the set of adapted features with an encoder.

According to an aspect, an apparatus comprises at least one processor; and at least one memory including computer program code; the at least one memory and the computer program code configured to, with the at least one processor, cause the apparatus at least to: obtain an encoded set of features of input data; decode the encoded set of features to obtain a plurality of reconstructed feature maps; and cause execution of at least one task neural network based on the plurality of reconstructed feature maps.

According to an aspect, a method comprises: obtaining an encoded set of features of input data; decoding the encoded set of features to obtain a plurality of reconstructed feature maps; and causing execution of at least one task neural network based on the plurality of reconstructed feature maps.

According to an aspect, a computer program comprises instructions for causing an apparatus to perform at least the following: obtaining an encoded set of features of input data; decoding the encoded set of features to obtain a plurality of reconstructed feature maps; and causing execution of at least one task neural network based on the plurality of reconstructed feature maps.

According to an aspect, an apparatus comprises means for obtaining an encoded set of features of input data; means for decoding the encoded set of features to obtain a plurality of reconstructed feature maps; and means for causing execution of at least one task neural network based on the plurality of reconstructed feature maps.

Many of the attendant features will be more readily appreciated as they become better understood by reference to the following detailed description considered in connection with the accompanying drawings.

### DESCRIPTION OF THE DRAWINGS

The accompanying drawings, which are included to provide a further understanding of the example embodiments and constitute a part of this specification, illustrate example embodiments and together with the description help to explain the example embodiments. In the drawings:
FIG. 1 illustrates an example of a data coding system comprising an encoder device, a decoder device, and a machine configured to perform a task, according to an example embodiment;
FIG. 2 illustrates an example of an apparatus configured to practice one or more example embodiments;
FIG. 3 illustrates an example of a neural network, according to an example embodiment;
FIG. 4 illustrates an example of an elementary computation unit, according to an example embodiment;
FIG. 5 illustrates an example of a convolutional classification neural network, according to an example embodiment;
FIG. 6 illustrates an example of an auto-encoder comprising an encoder neural network and a decoder neural network for feature extraction, data encoding, or decoding, according to an example embodiment;
FIG. 7 illustrates an example of a dense convolutional neural network for feature extraction, according to an example embodiment;
FIG. 8 illustrates an example of a video encoder, according to an example embodiment;
FIG. 9 illustrates an example of a video encoder, according to an example embodiment;
FIG. 10 illustrates an example of a pipeline for video coding for machines, according to an example embodiment;
FIG. 11 illustrates an example of a video encoder for machines, according to an example embodiment;
FIG. 12 illustrates an example of a video decoder for machines, according to an example embodiment;
FIG. 13 illustrates an example of a method for data encoding, according to an example embodiment; and
FIG. 14 illustrates an example of a method for data decoding, according to an example embodiment.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present examples may be constructed or utilized. The description sets forth the functions of the example and a possible sequence of steps for constructing and operating the example. However, the same or equivalent functions and sequences may be accomplished by different examples.

Reducing distortion in image and video compression may be intended for increasing human perceptual quality, because the human user may be considered as the consumer for the decompressed data. However, with the advent of machine learning, for example deep learning, machines operating as autonomous agents may be configured to analyze data and even make decisions without human intervention. Examples of such analysis tasks include object detection, scene classification, action classification, semantic segmentation, video event detection, anomaly detection, pedestrian tracking, etc. Example use cases and applications include self-driving cars, video surveillance cameras and public safety, smart sensor networks, smart TV and smart advertisement, person reidentification, smart traffic monitoring, drones, etc. Since decoded data is more likely to be consumed by machines, it may be desirable to apply other quality metrics in addition or alternative to human perceptual quality, when considering media compression for inter-machine communication. Also, dedicated algorithms for compressing and decompressing data for machine consumption may be different from algorithms for compressing and decompressing data for human consumption. The set of tools and concepts for compressing and decompressing data for machine consumption may be referred to as video coding for machines (VCM).

Furthermore, a decoder device may comprise or have access to multiple machines, for example machine learning (ML) functions such as neural networks (NN). ML functions may be used in a certain combination with or without other machines, such as for example non-ML functions including, but not limited to, user related functions. Execution of the functions may be controlled by an orchestrator sub-system, which may be for example configured to determine an order of execution among functions. Multiple machines may be used for example in succession, based on the output of the previously used machine, and/or in parallel. For example, a decompressed video may be analyzed by one machine (e.g. a first neural network) for detecting pedestrians, by another machine (e.g. a second neural network) for detecting cars, and by another machine (e.g. a third neural network) for estimating depth of pixels in the video frames.

A neural network is one type of a machine, but it is appreciated that any process or algorithm, either learned from data or not, which analyzes or processes data for a certain task may be considered as a machine. Furthermore, receiver or decoder side may refer to a physical or abstract entity or device, which may contain in addition to the decoder one or more machines, and which may be configured to run the machine(s) on a decoded video representation. The video may have been encoded by another physical or abstract entity or device, which may be referred to as transmitter or encoder side. The encoder and decoder may be also embodied in a single device.

According to an example embodiment, an apparatus may obtain feature maps extracted from input data. The extracted feature maps may be adapted such that the features are more suitable for encoding by an encoder. A decoder may obtain the encoded data, reconstruct the input data, and cause execution of a machine based on the reconstructed input data.

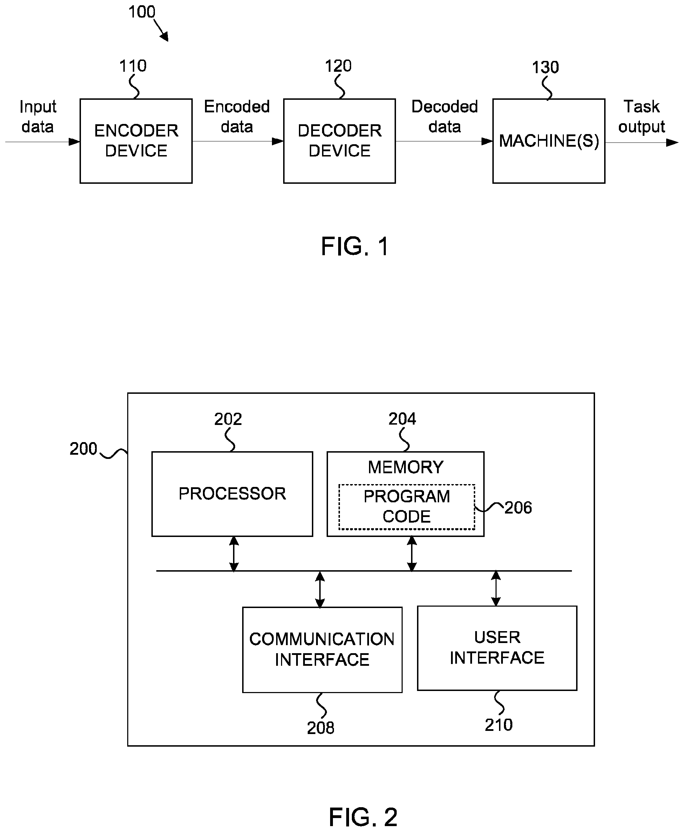

FIG. 1 illustrates an example of a data coding system 100 comprising an encoder device 110, a decoder device 120, and one or more machines 130, according to an example embodiment. Encoder device 110 may be configured to receive or otherwise obtain input data and produce encoded data, which may comprise an encoded representation of the input data. The encoded data may for example comprise a compressed version of the input data.

The encoded data may be delivered to decoder device 120 by various means, for example over a communication network. Therefore, the encoder device 110 may comprise a transmitter. The decoder device 120 may comprise a receiver. Alternatively, encoded data may be stored on a storage medium such as for example a hard drive or an external memory and retrieved from the memory by decoder device 120. The encoded data may comprise encoded features and/or encoded signaling data. The encoded data may be formatted as one or more bitstreams, files, or the like. The decoder device 120 may be configured to reconstruct the input data based on the encoded data received from the encoder device 110, or otherwise accessed by decoder device 120. As a result, decoded data may be output by the decoder device 120.

According to an example embodiment, encoder device 110 and decoder device 120 may be embodied as separate devices. It is however possible that a single device comprises one or more encoders and one or more decoders, for example as dedicated software and/or hardware components. Encoder device 110 may comprise a video encoder or video compressor. Decoder device 120 may comprise a video decoder or video decompressor.

As will be further described below, the encoder device 110 may comprise a feature extractor and an encoder such that the encoder is configured to encode the extracted features, for example features extracted from video data. Alternatively, the encoder device 110 may be configured to receive the extracted features from an external feature extractor. The feature extractor may comprise a feature extraction neural network (FX-NN) or other feature extraction algorithm. The encoder may be implemented as an algorithmic encoder, for example an algorithmic video encoder. The decoder device 120 may comprise a decoder, which may be implemented as an algorithmic decoder. The decoder device 120 may be configured to decode the encoded features. Even though some example embodiments are directed to video encoders and video decoders, it is appreciated that example embodiments may be also applied to other type of data, a such as for example image data.

The decoded data provided by decoder device 120 may be processed by one or more machines 130. The one or more machines 130 may be located at decoder device 120, or at other device (s) . The one or more machines 130 may comprise one or more machine learning (ML) functions configured to perform one or more machine learning tasks. Examples of machine learning tasks include classifying an object, detecting an object of interest, recognizing identity of an object. Further tasks may include semantic segmentation, denoising, style transfer, super-resolution, or the like. The one or more machines 130 may comprise one or more neural networks. Alternatively, or additionally, the one or more machines 130 may comprise one or more non-ML functions such as for example algorithms or other non-learned functions. The non-ML functions may for example include algorithms for performing similar tasks as the machine learning functions. Different machines 130 may be associated with different metrics for encoding and/or decoding quality.

The one or more machines 130 may comprise models such as for example neural networks (e.g. task-NNs), for which it is possible to compute gradients of their output with respect to their input. Gradients with respect to a variable X, for example an input of a model, may be determined based on a loss function. For example, gradients of the loss function may be computed with respect to variable X. If the machines 130 comprise parametric models (such as neural networks), the gradients may be obtained based on computing the gradients of their output first with respect to their internal parameters and then with respect to their input, for example by using the chain rule for differentiation in mathematics. In case of neural networks, backpropagation may be used to obtain the gradients of the output of a neural network with respect to its input.

FIG. 2 illustrates an example of an apparatus configured to practice one or more example embodiments, according to an example embodiment. The apparatus 200 may for example comprise the encoder device 110 or the decoder device 120. Apparatus 200 may comprise at least one processor 202. The at least one processor 202 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus 200 may further comprise at least one memory 204. The at least one memory 204 may be configured to store, for example, computer program code 206 or the like, for example operating system software and application software. The at least one memory 204 may comprise one or more volatile memory devices, one or more non-volatile memory devices, and/or a combination thereof. For example, the at least one memory 204 may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

Apparatus 200 may further comprise communication interface 208 configured to enable apparatus 200 to transmit and/or receive information, for example compressed video data to/from other devices. The communication interface 208 may be configured to provide at least one wireless radio connection, such as for example a 3GPP mobile broadband connection (e.g. 3G, 4G, 5G); a wireless local area network (WLAN) connection such as for example standardized by IEEE 802.11 series or Wi-Fi alliance; a short range wireless network connection such as for example a Bluetooth, NFC (near-field communication), or RFID connection; a local wired connection such as for example a local area network (LAN) connection or a universal serial bus (USB) connection, or the like; or a wired Internet connection.

Apparatus 200 may further comprise a user interface 210 comprising an input device and/or an output device. The input device may take various forms such a keyboard, a touch screen, or one or more embedded control buttons. The output device may for example comprise a display, a speaker, a vibration motor, or the like.

When the apparatus is configured to implement some functionality, some component and/or components of the apparatus 200, such as for example the at least one processor 202 and/or the at least one memory 204, may be configured to implement this functionality. Furthermore, when the at least one processor 202 is configured to implement some functionality, this functionality may be implemented using program code 206 comprised, for example, in the at least one memory 204.

The functionality described herein may be performed, at least in part, by one or more computer program product components such as software components. According to an example embodiment, the apparatus 200 comprises a processor or processor circuitry, such as for example a microcontroller, configured by the program code 206 when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The apparatus 200 may comprise means for performing at least one method described herein. In one example, the means comprises the at least one processor 202, the at least one memory 204 including program code 206, the at least one memory 204 and the program code 206 configured to, with the at least one processor 202, cause the apparatus 200 to perform the method(s).

Apparatus 200 may comprise a computing device such as for example mobile phone, a tablet computer, a laptop, an internet of things (IoT) device, or the like. Examples of IoT devices include, but are not limited to, consumer electronics, wearables, and smart home appliances. In one example, apparatus 200 may comprise a vehicle such as for example a car. Although apparatus 200 is illustrated as a single device it appreciated that, wherever applicable, functions of apparatus 200 may be distributed to a plurality of devices, for example to implement example embodiments as a cloud computing service.

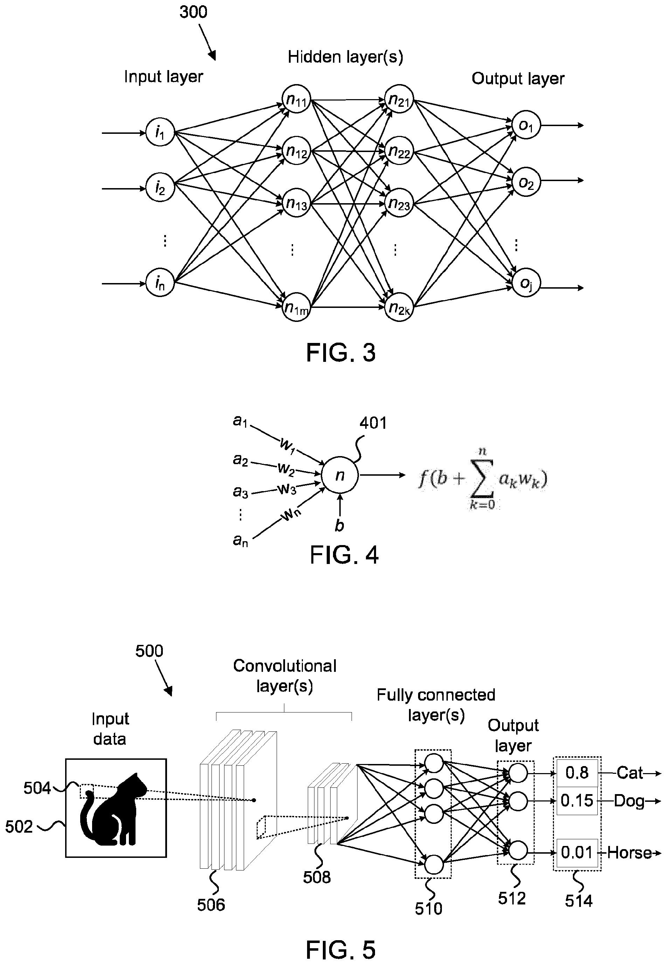

FIG. 3 illustrates an example of a neural network, according to an example embodiment. A neural network may comprise a computation graph with several layers of computation. For example, neural network 300 may comprise an input layer, one or more hidden layers, and an output layer. Nodes of the input layer, *i*₁ to *i*ₙ, may be connected to one or more of the m nodes of the first hidden layer, *n*₁₁ to *n*₁ₘ. Nodes of the first hidden layer may be connected to one or more of the k nodes of the second hidden layer, *n*₂₁ to *n*₂ₖ. It is appreciated that even though the example neural network of FIG. 3 illustrates two hidden layers, a neural network may apply any number and any type of hidden layers. Neural network 400 may further comprise an output layer. Nodes of the last hidden layer, in the example of FIG. 3 the nodes of the second hidden layer, *n*₂₁ to *n*₂ₖ, may be connected to one or more nodes of the output layer, *o*₁ to *o*ⱼ. It is noted that the number of nodes may be different for each layer of the network. A node may be also referred to as a neuron, a computation unit, or an elementary computation unit. Terms neural network, neural net, network, and model may be used interchangeably. A model may comprise a neural network, but a model may also refer to another learnable model. Weights of the neural network may be referred to as learnable parameters or simply as parameters. In the example of FIG. 3, one or more of the layers may be fully connected layers, for example layers where each node is connected to every node of a previous layer.

Two example architectures of neural networks include feed-forward and recurrent architectures. Feed-forward neural networks are such that there is no feedback loop. Each layer takes input from one or more previous layers and provides its output as the input for one or more of the subsequent layers. Also, units inside certain layers may take input from units in one or more of preceding layers and provide output to one or more of following layers.

Initial layers, for example layers close to the input data, may extract semantically low-level features. In an example image or video data, the low-level features may correspond to edges and textures in images or video frames. Intermediate and final layers may extract more high-level features. After the feature extraction layers there may be one or more layers performing a certain task, such as classification, semantic segmentation, object detection, denoising, style transfer, super-resolution, or the like.

In recurrent neural networks there is a feedback loop from one or more nodes of one or more subsequent layers. This causes the network to become becomes stateful. For example, the network may be able to memorize information or a state.

FIG. 4 illustrates an example of an elementary computation unit, according to an example embodiment. The elementary computation unit may comprise a node 401, which may be configured to receive one or more inputs, *a*₁ to *a*ₙ, from one or more nodes of one or more previous layers and compute an output based on the input values received. The node 401 may also receive feedback from one or more nodes of one or more subsequent layers. Inputs may be associated with parameters to adjust the influence of a particular input to the output. For example weights *w*₁ to *w*ₙ associated with the inputs *a*₁ to *a*ₙ may be used to multiply the input values *a*₁ to *a*ₙ. The node 401 may be further configured combine the inputs to an output, or an activation. For example, the node 401 may be configured to sum the modified input values. A bias or offset b may be also applied to add a constant to the combination of modified inputs. Weights and biases may be learnable parameters. For example, when the neural network is trained for a particular task, the values of the weights and biases associated with different inputs and different nodes may be updated such that an error associated with performing the task is reduced to an acceptable level.

Furthermore, an activation function *f*() may be applied to control when and how the node 401 provides the output. Activation function may be for example a non-linear function that is substantially linear in the region of zero but limits the output of the node when the input increases or decreases. Examples of activation functions include, but are not limited to, a step function, a sigmoid function, a tanh function, a ReLu (rectified linear unit) function. The output may be provided to nodes of one or more following layers of the network, and/or to one or more nodes of one or more previous layers of the network.

A forward propagation or a forward pass may comprise feeding a set of input data through the layers of the neural network 400 and producing an output. During this process the weights and biases of the neural network 400 affect the activations of individual nodes and thereby the output provided by the output layer.

One property of neural networks and other machine learning tools is that they are able to learn properties from input data, for example in supervised way or in unsupervised way. Learning may be based on teaching the network by a training algorithm or based on a meta-level neural network providing a training signal.

In general, a training algorithm may include changing some properties of the neural network such that its output becomes as close as possible to a desired output. For example, in the case of classification of objects in images or video frames, the output of the neural network may be used to derive a class or category index, which indicates the class or category that the object in the input data belongs to. Training may happen by minimizing or decreasing the output's error, also referred to as the loss.

During training the generated or predicted output may be compared to a desired output, for example ground-truth data provided for training purposes, to compute an error value or a loss value. The error may be calculated based on a loss function. Updating the neural network may be then based on calculating a derivative with respect to learnable parameters of the network. This may be done for example using a backpropagation algorithm that determines gradients for each layer starting from the final layer of the network until gradients for the learnable parameters have been obtained. Parameters of each layer are updated accordingly such that the loss is iteratively decreased. Examples of losses include mean squared error, cross-entropy, or the like. In deep learning, training may comprise an iterative process, where at each iteration the algorithm modifies parameters of the neural network to make a gradual improvement of the network's output, that is, to gradually decrease the loss.

Training phase of the neural network may be ended after reaching an acceptable error level. In inference phase the trained neural network may be applied for a particular task, for example, to provide a classification of an unseen image to one of a plurality of classes based on content of an input image.

Training a neural network may be seen as an optimization process, but the final goal may be different from a typical goal of optimization. In optimization, the goal may be to minimize a functional. In machine learning, a goal of the optimization or training process is to make the model learn the properties of the data distribution from a limited training dataset. In other words, the goal is to learn to use a limited training dataset in order to learn to generalize to previously unseen data, that is, data which was not used for training the model. This may be referred to as generalization.

In practice, data may be split into at least two sets, a training data set and a validation data set. The training data set may be used for training the network, for example to modify its learnable parameters in order to minimize the loss. The validation data set may be used for checking performance of the network on data which was not used to minimize the loss as an indication of the final performance of the model. In particular, the errors on the training set and on the validation data set may monitored during the training process to understand the following issues: 1) if the network is learning at all - in this case, the training data set error should decrease, otherwise the model is in the regime of underfitting; 2) if the network is learning to generalize - in this case, also the validation set error should decrease and not be much higher than the training data set error. If the training data set error is low, but the validation data set error is much higher than the training data set error, or it does not decrease, or it even increases, the model is in the regime of overfitting. This means that the model has just memorized properties of the training data set and performs well on that set, but performs poorly on a set not used for tuning its parameters.

FIG. 5 illustrates an example of a convolutional classification neural network 500. The convolutional classification neural network 500 represents an example of a machine 130. A convolutional neural network 500 comprises at least one convolutional layer. A convolutional layer performs convolutional operations to extract information from input data, for example image 502, to form a plurality of feature maps 506. A feature map may be generated by applying a convolutional filter or a convolutional kernel to a subset of input data, for example block 504 in image 502, and sliding the filter through the input data to obtain a value for each element of the feature map. The filter may comprise a matrix or a tensor, which may be for example multiplied with the input data to extract features corresponding to that filter. A plurality of feature maps may be generated based on applying a plurality of filters. A further convolutional layer may take as input the feature maps from a previous layer and apply the same filtering principle on the feature maps 506 to generate another set of feature maps 508. Weights of the filters may be learnable parameters and they may be updated during a training phase, similar to parameters of neural network 300. Similar to node 501, an activation function may be applied to the output of the filter(s). The convolutional neural network may further comprise one or more other type of layers such as for example fully connected layers 510 after and/or between the convolutional layers. An output may be provided by an output layer 512, which in the example of FIG. 5 comprises a classification layer. For a classification task the output may comprise an approximation of a probability distribution, for example an *N*-dimensional array 514, where N is the number of classes, and where the sum of the values in the array is 1. Each element of the array 514 may indicate a probability of the input image belonging to a particular class, such as for example a class of cats, dogs, horses, or the like. Elements of the array 514 may be called bins. The output may be represented either as one-hot representation where only one class bin is one and other class bins are zero, or as soft labels where the array comprises a probability distribution instead of a one-hot representation. In the latter case, all bins of the output array 514 may have a value different from zero, as illustrated in FIG. 5.

In addition to implementing the one or more machines 130, neural networks may be also applied at encoder device 110 or decoder device 120. Neural networks may be used either to perform the whole encoding or decoding process or to perform some steps of the encoding or decoding process. The former option may be referred to as end-to-end learned compression. Learned compression may be for example based on an auto-encoder structure that is trained to encode and decode video data.

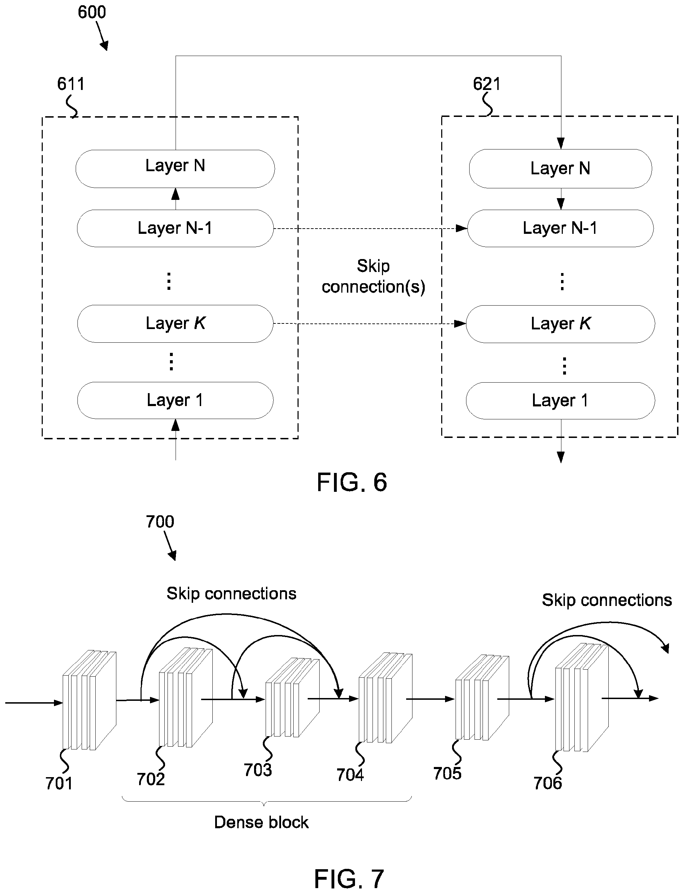

FIG. 6 illustrates an example of an auto-encoder 600 comprising an encoder neural network 611 and a decoder neural network 621, according to an example embodiment The encoder neural network 611 may be configured for various tasks such as for example for compressing data or extracting features for compression by an algorithmic encoder. The decoder network 621 may take the data output by the encoder network 611 and output a reconstruction of the original data, possibly with some loss. It is noted that example embodiments may be applied to various other type of neural networks configured to be applied in encoding or decoding process and the auto-encoder 600 is provided only as an example.

According to an example embodiment, the auto-encoder 600 may comprise one or more lateral skip connections between corresponding layers of the encoder network 611 and the decoder network 621. For example *k*th layer of the encoder network 611 may provide its output to the kth layer of the decoder network 621. An autoencoder 600, with the skip connections may be used as a basis for a feature extractor neural network (FX-NN), as will be further described below. The auto-encoder 600 may be trained by any suitable manner to extract features for subsequent processing by an encoder and a decoder, for example video encoder and video decoder. The auto-encoder 600 may be for example trained to provide suitable features for a single task, such as for example object detection, a few known tasks, or any possible task. The auto-encoder 600 may be therefore trained based on outputs of the corresponding task neural network(s).

Auto-encoder 600 may be alternatively trained for encoding (compression) and decoding (decompression) data. In this case the encoder network 611 may operate as an neural encoder, for example a neural video encoder, and the decoder network 621 may operate as a neural decoder, for example a neural video decoder. When training the auto-encoder 600 for encoding and decoding, a subset of data may be sampled from a training dataset and input to the encoder network 611 at each training iteration. The output of the encoder network 611 may be subject to further processing steps, such as for example binarization, quantization, and/or entropy coding. Finally, the output, which may be also referred to as a code, may be input to the decoder network 621 which may reconstruct the original data input to the encoder network 611. The reconstructed data may differ from the original input data. The difference between the input data and the reconstructed data may be referred to as the loss. However, the auto-encoder pipeline may be also designed in a way that there is no loss in reconstruction. A loss or error value may be computed by comparing the output of the decoder network 621 to the input of the encoder network 611. The loss value may be computed for example based on a mean-squared error (MSE), a pixel signalto-noise ratio (PSNR), structural similarity (SSIM), or the like. Such distortion metrics may be inversely proportional to the human visual perception quality. Another loss function may be used for encouraging the output of the encoder to be more compressible, for example to have low entropy. This loss may be used in addition to the loss measuring the quality of data reconstruction.

FIG. 7 illustrates an example of a dense convolutional neural network for feature extraction, according to an example embodiment. A dense convolutional neural network, such as for example the DenseNet, may comprise a plurality of layers, where each layer may obtain additional inputs from all previous layers. Furthermore, each layer may provide its output feature maps all subsequent layers. However, in some variations, a dense convolutional neural network may comprise one or more dense blocks. Within a dense block the outputs of each layer may be provided to inputs of all subsequent layers. However, the output of the dense block may not be provided to subsequent layers. As an example, the dense convolutional neural network 700 may comprise layers 701 to 706, and one dense block comprising layers 702 to 704. However, in practice the number of layers and dense blocks may be higher. Within the dense block the output of layer 701 may be provided to layer 702 and over skip connections to layers 703 and 704. The output of layer 702 may be provided to layer 703 and over a skip connection to layer 704. The output of layer 704, which is also the output of the dense block, may be provided to layer 705 and not to any other subsequent layer. According to an example embodiment, when a dense convolutional neural network is applied as a feature extractor neural network, feature maps may be extracted based on an output of a dense block. The dense convolutional neural network 700 may be trained to extract features similar to training the auto-encoder 600, for example based on outputs of the task neural network(s).

Video encoding and/or decoding may be performed by a video codecs. Examples of algorithmic video codecs include hybrid video codecs, such as for example similar to ITU-T H.263, H.264, H.265, and H.266 standards. Hybrid video encoders may code video information in two phases. Firstly, pixel values in a certain picture area, for example a block, may be predicted for example by motion compensation means or spatial means. Motion compensation may comprise finding and indicating an area in one of the previously coded video frames that corresponds to the block being coded. Applying spatial means may comprise using pixel values around the block to be coded in a specified manner.

Secondly, the prediction error, for example the difference between the predicted block of pixels and the original block of pixels, may be coded. This may be done based on transforming the difference in pixel values using a transform, such as for example discrete cosine transform (DCT) or a variant of DCT, quantizing the coefficients, and entropy coding the quantized coefficients. By varying the fidelity of the quantization process, encoder can control the rate-distortion to balance between the accuracy of the pixel representation (picture quality) and size of the resulting coded video representation (file size or transmission bitrate).

Inter prediction, which may also be referred to as temporal prediction, motion compensation, or motioncompensated prediction, exploits temporal redundancy. In inter prediction the sources of prediction are previously decoded pictures.

Intra prediction utilizes the fact that adjacent pixels within the same picture are likely to be correlated. Intra prediction can be performed in spatial or transform domain, which means that either sample values or transform coefficients can be predicted. Intra prediction may be exploited in intra coding, where no inter prediction is applied.

One outcome of the coding procedure may comprise a set of coding parameters, such as motion vectors and quantized transform coefficients. Many parameters can be entropy-coded more efficiently if they are predicted first from spatially or temporally neighbouring parameters. For example, a motion vector may be predicted from spatially adjacent motion vectors and the difference relative to the motion vector predictor may be coded. Prediction of coding parameters and intra prediction may be collectively referred to as in-picture prediction.

A video decoder may reconstruct the output video based on prediction means similar to the encoder to form a predicted representation of the pixel blocks. Reconstruction may be based on motion or spatial information created by the encoder and stored in the compressed representation and prediction error decoding, which may comprise an inverse operation of the prediction error coding to recover the quantized prediction error signal in spatial pixel domain. After applying prediction and prediction error decoding means the decoder may sum up the prediction and prediction error signals, for example pixel values, to form the output video frame. The decoder, and also the encoder, can also apply additional filtering means to improve the quality of the output video before passing it for display and/or storing it as prediction reference for the forthcoming frames in the video sequence.

In video codecs the motion information may be indicated with motion vectors associated with each motion compensated image block. Each of these motion vectors represents displacement of the image block in the picture to be coded or decoded and the prediction source block in one of the previously coded or decoded pictures. In order to represent motion vectors efficiently, the motion vectors may be coded differentially with respect to block specific predicted motion vectors. The predicted motion vectors may be created in a predefined way, for example based on calculating a median of encoded or decoded motion vectors of an adjacent blocks.

Another way to create motion vector predictions may comprise generating a list of candidate predictions from adjacent blocks and/or co-located blocks in temporal reference pictures and signalling the chosen candidate as the motion vector predictor. In addition to predicting the motion vector values, the reference index of previously coded or decoded picture can be predicted. The reference index may be predicted from adjacent blocks and/or or co-located blocks in temporal reference picture.

Moreover, high efficiency video codecs may employ an additional motion information coding or decoding mechanism, which may be called a merging/merge mode, where motion field information comprising a motion vector and corresponding reference picture index for each available reference picture list, is predicted and used without any modification/correction. Similarly, predicting the motion field information may be carried out based on using the motion field information of adjacent blocks and/or co-located blocks in temporal reference pictures and the used motion field information may be signalled among a list of motion field candidate list filled with motion field information of available adjacent/co-located blocks.

The prediction residual after motion compensation may be first transformed with a transform kernel, for example DCT, and then coded. One reason for this is that there may still be some correlation among the residual and applying the transform may reduce this correlation and enable to provide more efficient coding.

Video encoders may utilize Lagrangian cost functions to find optimal coding modes, for example the desired macroblock mode and associated motion vectors. This kind of cost function may use a weighting factor λ to tie together the (exact or estimated) image distortion due to lossy coding methods and the (exact or estimated) amount of information that is required to represent the pixel values in an image area: *C* = *D* + λ*R*, where C is the Lagrangian cost to be minimized, D is the image distortion, for example mean squared error (MSE) with the mode and motion vectors considered, and *R* is the number of bits needed to represent the required data to reconstruct the image block in the decoder, which may include the amount of data to represent the candidate motion vectors.

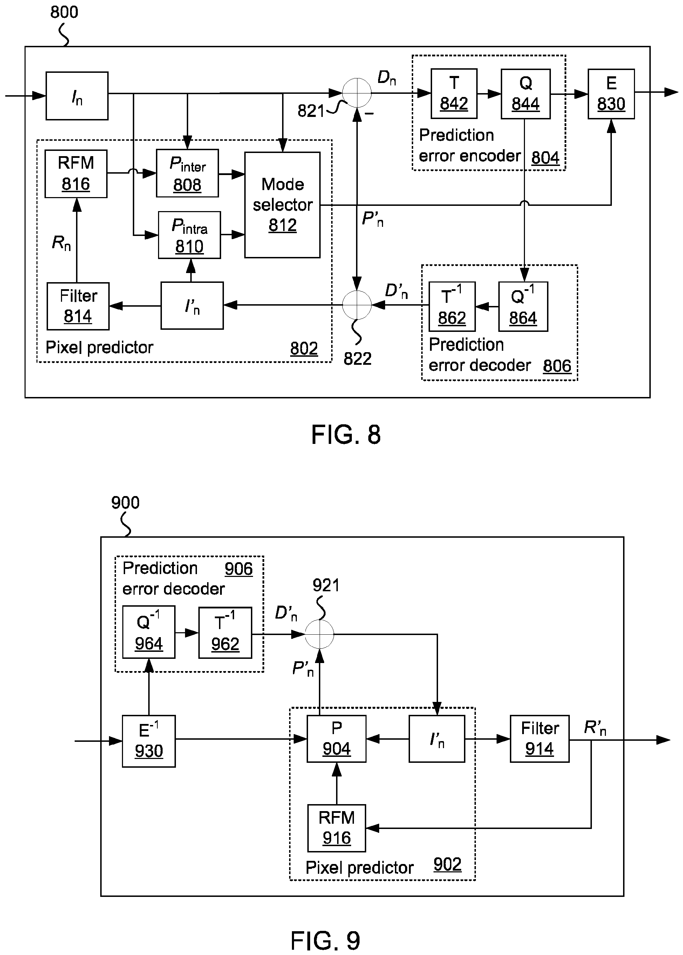

FIG. 8 illustrates an example of a video encoder 800, according to an example embodiment. Video encoder 800 is provided as an example of an algorithmic video encoder. The video encoder 800 may comprise a pixel predictor 802, a prediction error encoder 804, and/or prediction error decoder 806. The pixel predictor 802 may comprise an inter predictor 808, an intra-predictor 810, a mode selector 812, a filter 814, and/or a reference frame memory (RFM) 816. The pixel predictor 802 may receive a plurality of images or video frames, for example image *I*ₙ, for encoding at the inter predictor 808 and the intra-predictor 810. The inter predictor 808 may determine a difference between an image *I*ₙ and a motion compensated reference frame obtained from the reference frame memory 816. The intra predictor 810 may determine a prediction for an image block based on the already processed parts of the current image. The output of both the inter predictor 808 and the intra predictor 810 may be provided to the mode selector 812. Intra prediction may be performed in multiple modes and the predicted signals may be provided to the mode selector 812. The mode selector 812 may also receive a copy of the image *I*ₙ.

Depending on selection of encoding mode for the current block, the output of the inter-predictor 808, the output of one of the optional intra-predictor modes, or an output of a surface encoder within the mode selector 812 may be provided as an output *P*'ₙ of the mode selector 812. The output of the mode selector 812 may be provided to a first summing device 821. The first summing device 821 may subtract the output of the pixel predictor 802, from the image *I*₀ to obtain a first prediction error signal *D*ₙ which may be input to the prediction error encoder 804.

The pixel predictor 802 may further receive, for example from a second summing device 822 acting as a preliminary reconstructor, a combination of the prediction representation of the image block *P*'ₙ and the output *D*'ₙ of the prediction error decoder 806. The preliminary reconstructed image *I*'_{N} may be provided to the intra-predictor 810 and to a filter 814. The filter 814 may filter the preliminary reconstructed image *I*'_{N} and output a final reconstructed image *R*_{N}, which may be saved in the reference frame memory 816. The reference frame memory 816 may be connected to the inter predictor 808 such that the reconstructed image *R*_{N} may be used as a reference image to which a future video frame is compared at inter predictor 808.

The prediction error encoder 804 may comprise a transform unit 842 and a quantizer 844. The transform unit 842 may be configured to transform the prediction error signal *D*_{N} to a transform domain. The transform may comprise a discrete cosine transform (DCT). The quantizer 844 may be configured to quantize the transform domain signal, for example DCT coefficients, to output quantized coefficients.

The prediction error decoder 806 may receive the output from the prediction error encoder 804 and perform operations opposite to the prediction error encoder 804 to produce a decoded prediction error signal *D*'_{N} as an output of the prediction error decoder 806. The decoded prediction error signal *D*'_{N} may be combined with the prediction representation of the image block *P*'_{N} at the second summing device 822, to produce the preliminary reconstructed image *I*'_{N}. The prediction error decoder 806 may comprise a dequantizer 864, which may be configured to dequantize the quantized coefficient values, for example DCT coefficients, to reconstruct the transform domain signal. The prediction error decoder may further comprise an inverse transform unit 862, which may be configured to perform the inverse transformation to the reconstructed transform domain signal. The output of the inverse transform unit 862 may contain reconstructed block(s) of an image. The prediction error decoder 806 may further comprise a block filter, which may be configured to filter the reconstructed block(s) according to further decoded information and filter parameters.

The entropy encoder 830 may receive the output of the prediction error encoder 803 and may perform entropy encoding or variable length encoding on the output of the prediction error coder 804. Entropy coding or decoding may be performed in many ways. For example, context-based coding or decoding may be applied, where both the encoder and the decoder may modify a context state of a coding parameter based on previously coded or decoded coding parameters. Context-based coding may for example comprise context adaptive binary arithmetic coding (CABAC), context-based variable length coding (CAVLC), or any similar entropy coding. Entropy coding or decoding may alternatively or additionally be performed using a variable length coding scheme, such as Huffman coding or decoding, or, Exp-Golomb coding or decoding. Decoding of coding parameters from an entropy-coded bitstream or codewords may be referred to as parsing.

FIG. 9 illustrates an example of a video decoder 900, according to an example embodiment. The video decoder 900 is provided as an example of an algorithmic video decoder. The video decoder 900 may comprise a pixel predictor 902 and a prediction error decoder 906. The encoded video data may be received at an entropy decoder 930, which may provide the entropy decoded video data to the prediction error decoder 906. The prediction error decoder 906 may comprise a dequantizer 964, which may be configured to dequantize the quantized coefficient values of the entropy decoded data to reconstruct a transform domain signal, similar to dequantizer 864 at the encoder side. The prediction error decoder 906 may further comprise an inverse transform unit 962, which may be configured to perform the inverse transformation to the reconstructed transform domain signal to obtain a decoded prediction error signal *D*'_{N}. The decoded prediction error signal *D*'_{N} may be combined with a prediction representation of an image block *P*'_{N} at a summing device 921 to obtain a preliminary reconstructed image *I*'_{N}. Filter 914 may filter the preliminary reconstructed image *I*'_{N} and output a reconstructed image *R*'_{N}, which may be provided as an output of the video decoder 900 and also saved in the reference frame memory 916 for prediction of future video frames at predictor 904, which may operate as an intra-predictor or an inter predictor.

Even though FIG. 8 and FIG. 9 illustrate a single layer encoder and a single-layer decoder, it is understood that example embodiments may be applied also for scalable video coding, where the encoded video data may comprise a base layer and one or more enhancement layers for providing different levels of quality. Furthermore, example embodiments may be applied for two-dimensional video content or volumetric video content such as for example spatial video content associated with virtual reality applications. It is also noted that a neural network may be used to perform some step(s) of the encoding or decoding process, or the entire encoding or decoding process.

One approach to perform video encoding and decoding for machines is to use a pre-trained feature-extraction neural network (FX-NN) to extract features from video data and use an codec to encode and decode extracted feature maps. An example of suitable codec is VVC/H.266 (Versatile Video Coding), since feature maps may be extracted from a video sequence and they still have some visual information and structure.

However, as feature maps are now coded instead of pure video data, the example embodiments disclosed herein enable optimization of packing of the features into images or video frames. Furthermore, new metrics for performing rate-distortion optimization (RDO) may be applied. Furthermore, example embodiments enable optimized selection of the layer of the FX-NN from which the features are extracted and subsequently coded.

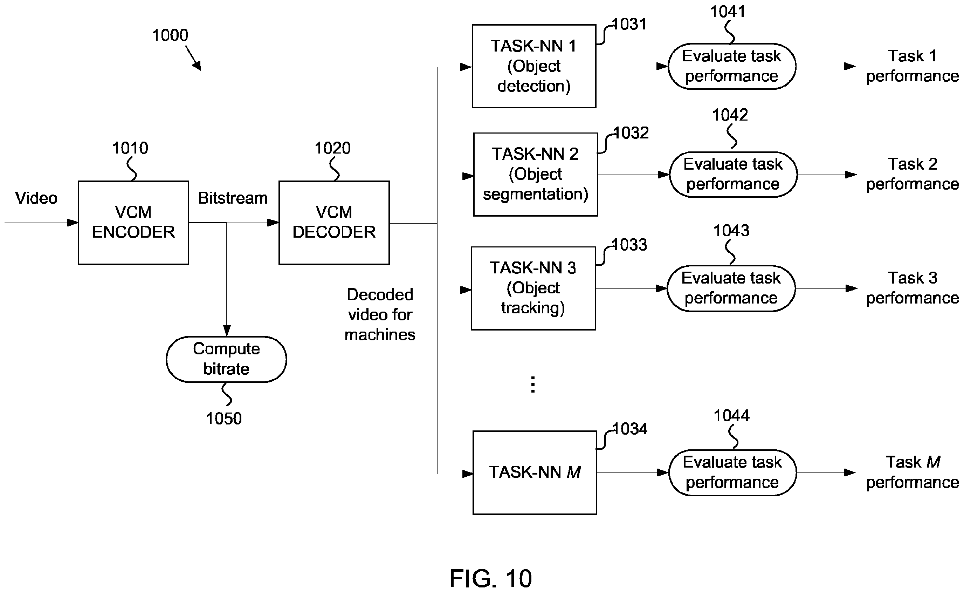

FIG. 10 illustrates an example of a pipeline 1000 for video coding for machines (VCM), according to an example embodiment. The VCM pipeline 1000 may comprise a VCM encoder 1010 and a VCM decoder 1020, configured to encode and decode data for use by *M* task neural networks (task-NN), where M ≥ 1. The task-NNs 1031 to 1034 are provided as examples of machines. The task-NNs may be configured to perform different tasks. For example, task-NN 1031 may be configured to perform object detection, task-NN 1032 may be configured to perform object segmentation, and task-NN 1033 may be configured to perform object tracking, etc.

At operation 1050, a bitrate may be computed based on the encoded bitstream. Even though bitstream is used as an example, it is understood that the example embodiments may be generalized to any type of data streams. The computed bitrate may be used for example in rate-distortion optimization. At operations 1041 to 1044, task performances of the different task-NNs may be evaluated. The resulting task performance metrics may be used to adapt coding parameters of VCM encoder 1010 and/or VCM decoder 1020.

To improve performance of the VCM pipeline 1000, a set of techniques is provided for compressing and decompressing video such that the decompressed data can be used by machine(s), for example task-NNs 1031 to 1034. According to an example embodiment, features may be first extracted from input video data, by an FX-NN or other feature extraction algorithm. The extracted feature maps may be encoded and decoded with a video codec, for example an algorithmic video codec. To this end, according to one example embodiment, methods for organizing the feature maps into a format suitable for video codecs are disclosed. This format may comprise a frame that is constructed by placing several feature maps near each other, as will be further described below.

According to an example embodiment, the feature maps may be alternatively organized by projecting them into a suitable format by using a projection neural network. At decoder side, a re-projection neural network may be used to obtain the reconstructed features in their original format. The re-projected features may be decoded by a video decoder, or any other type of decoder such as a decoder neural network.

Furthermore, methods for adapting rate-distortion optimization (RDO) of codecs for VCM applications and methods for selecting a layer of the FX-NN for extracting features for VCM applications are disclosed.

A distinction may be made between encoder side and decoder side, which may be two physical or abstract entities, such as encoder device 110 and decoder device 120. The encoder device 110 and the decoder device 120 may be separate devices, or separate sub-devices hosted on a single device such as a mobile phone. The encoder device 110 may comprise an encoder, for example VCM encoder 1010. The decoder device 120 may comprise a decoder, for example VCM decoder 1020. The VCM encoder 1010 may comprise a video encoder, such as an H.265/HEVC (High Efficiency Video Coding) compliant video encoder. The VCM decoder 1020 may comprise a video decoder, such as an H.265/HEVC-compliant video decoder.

A feature extraction algorithm, for example an FX-NN, may be available at VCM encoder 1010. The VCM encoder 1010 may therefore obtain the feature maps based on extracting the plurality of feature maps from input data with an FX-NN. Other feature extraction methods include algorithms that detect keypoints in images or video frames. The encoder side device may have sufficient computational, memory and power capabilities to run the feature extraction algorithm. Alternatively, the VCM encoder 1010 may not include the feature extraction algorithm. Instead, the VCM encoder 1010 may obtain the extracted features by other means, for example by receiving the extracted features from another device or entity.

The decoder device 120 may comprise the one or more machines 130, for example the task-NNs 1031 to 1034, which may take decoded features as input and perform one or more tasks based on the decoded features. Alternatively, the decoder device 120 may provide the decoded features to another device or entity which includes the machine(s) 130. Alternatively, the decoded features may be stored on a memory of the decoder device 120. In order to support taking features as their input, machine(s) 130 may have been trained on features, or they may have been trained on original data (e.g., images or videos) and subsequently modified in order to support operation based on input features.

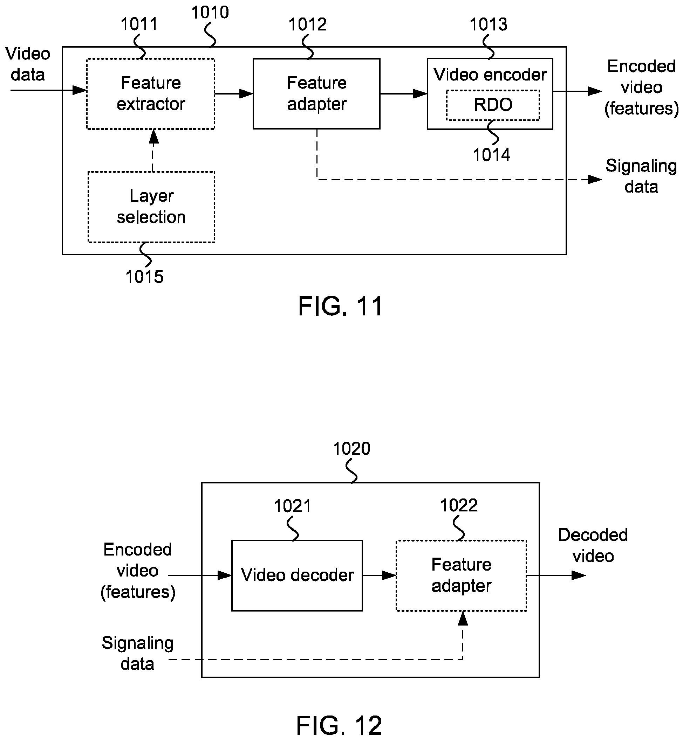

FIG. 11 illustrates an example of a video encoder 1010 for machines, according to an example embodiment. The VCM encoder 1010 may comprise a feature extractor 1011, for example an FX-NN. However, as discussed above, the feature extractor 1011 may be alternatively located external to the VCM encoder 1010. Therefore, the VCM encoder 1010 may obtain feature maps extracted from input data, either by an in-built feature extractor 1011 or by receiving the extracted features from another device or entity.

The VCM encoder 1010 may further comprise a feature adapter 1012, which may be configured to pack or project extracted feature maps to obtain a set of adapted features. The feature adapter 1012 may adapt the extracted feature maps such that the set of adapted features is more suitable for encoding by a video encoder 1013.

Video encoder 1013 may be configured to encode the set of adapted features. The video encoder 1013 may comprise an algorithmic video encoder such as for example video encoder 800. The video encoder 1013 may further comprise a rate-distortion optimization (RDO) function 1014, which may be configured to adapt resulting bitrate of the encoded video stream with respect to reconstruction quality. If feature extractor 1011 is implemented by an FX-NN, the VCM encoder 1010 may further comprise a layer selection function 1015 configured to determine a layer of the FX-NN, from which the features are extracted for subsequent processing by feature adapter 1012. As discussed above, instead of an algorithmic video encoder, the video encoder 1013 may alternatively comprise any other type of encoder, for example a neural video encoder such as for example the encoder network 611 of the auto-encoder 600.

Video codecs may be targeted for encoding and decoding predetermined formats of video data. The input video may be for example provided in the form of YUV frames, for example with 4:2:0 or 4:4:4 channel-sampling format. Thus, each video frame may include three channels. However, features extracted by an FX-NN may comprise a tensor, i.e. a multidimensional array, with more than three channels. The number of channels may be in the order of hundreds, for example 128. Also, due to downsampling operations possibly performed in the FX-NN, the spatial size (number of rows and columns) of feature maps may be small compared to the original image or video data.

According to an example embodiment, the feature maps extracted from video data may be packed to an image or at least one video frame. The set of adapted features may therefore comprise the image or the at least one video frame, to which the feature maps have been packed. A feature map may be packed into at least one target tile of an image or video frame. A tile may be also referred to as a cell. A tile may comprise a spatial portion of an image or a video frame. The tile size may be equal to the CTU (coding tree unit) size utilized in the codec. Hence, no intra prediction may be performed across tiles. CTU size may be a power of two. If a feature map is smaller than the target tile, padding data may be added in one or more empty portions of the target tile. This enables to adapt the dimensions of the extracted feature maps to characteristics of a video encoder 1013. The padding data may be generated based on an interpolation between boundaries of the features map and neighboring tiles, for example boundaries of feature maps located at neighboring tiles. This provides a smooth transition between tiles of the image or the at least one video frame and thereby coding performance may be improved. Alternatively, simpler padding strategies may be used to reduce complexity. The padding data may for example comprise zero padding, repetition padding, reflective padding. Repetition padding may comprise copying a subset of feature map elements to the empty portion(s) of the target tile. Reflective padding may comprise reversing an order of a subset of feature map elements and adding the reversed subset of elements to the empty portion(s) of the target tile.

According to an example embodiment, the VCM encoder 1010 may determine a spatial and/or temporal location of the target tile(s) for particular feature maps within the image or the at least one video frame based on correlation between feature maps. Determining a spatial and/or temporal location of a target tile may comprise selection of a target tile from a plurality of target tiles having predetermined spatial and/or temporal locations within the image or the at least one video frame. Spatial location may comprise a position within an image or video frame. Temporal location may comprise an index of a video frame within a sequence of video frames. In this example embodiment, intra and/or inter prediction may be performed between different feature maps.

The correlation or redundancy between different feature maps may be analyzed in order to determine an optimal placement for each feature map. Packing of correlated feature maps may be based on a type of prediction, e.g. intra or inter prediction. If intra prediction is performed between neighboring feature maps, correlated feature maps may be placed near each other in the spatial dimensions, for example adjacent to each other within an image or video frame. If inter prediction is performed between different frames, correlated feature maps may be placed near each other in spatial and temporal dimensions, for example in same or adjacent spatial location in the same or adjacent video frame.

According to an example embodiment, the VCM encoder 1010 may determine the spatial and/or temporal location of the target tile(s) based on rate-distortion metrics for multiple candidate target tile combinations for the extracted feature maps. For example, RDO may be performed by considering all or a subset of packing combinations. The VCM encoder 1010 may compare rate and distortion metrics, for example bitrate of the encoded bitstream and reconstruction quality such as MSE, for different options for packing the features maps into the image or video frame (s). One of the candidate target tile combinations may be then selected based on the evaluated rate-distortion metrics. The subset may be determined based on an initial correlation analysis. For example, the VCM encoder 1010 may determine a subset of feature maps, or portions of feature maps, for which the correlation within the subset is above a threshold. The VCM encoder 1010 may then determine a set of candidate target tile combinations for the subset of feature maps and select the target tiles for each feature map of the subset based on rate-distortion optimization within the determined set of candidate target tile combinations for the subset.

Correlation metrics between feature maps may be determined based on any suitable similarity measure in a tensor space. For example, correlation between feature maps, or portions of feature maps, may be determined based on computing a cosine similarity. Cosine similarity is a beneficial correlation metric, for example because it ignores the magnitude but keeps the structural information. The correlation metrics may be computed either on the feature maps, or, on the convolutional filters that produce the feature maps.

According to an example embodiment, packing of the feature maps into the tile(s) may comprise packing subsets of feature maps. This improves the structure of the packed feature image or video frame(s), since different correlation characteristics within feature maps may be taken into account. For example, subsets of multiple feature maps may be placed next to each other in spatial and/or temporal dimensions to increase the spatial and/or temporal redundancy and therefore improve the intra prediction and/or inter prediction. Subsets of feature maps may be also called crops. Particular crops of different feature maps may correspond to the same location in the different feature maps. Hence, VCM encoder 1010 may for example determine a first subset of a first feature map and pack the first subset spatially or temporally near a second subset of a second feature map, for example within the same tile, in a spatially and/or temporally adjacent tile, or in a tile within a predetermined range of tiles or video frames. The first subset and the second subset may be associated with a same location in the first feature map and the second feature map, respectively. It is however noted that there may be more than one second subsets corresponding to more than one second feature maps and therefore the VCM encoder 1010 may pack a plurality of subsets corresponding to a plurality of feature maps to the tiles of the image or the at least one video frame based on the correlation between the subsets of feature maps.

According to an example embodiment, if feature maps are small, for example having a size that is below a predetermined threshold such as a tile size, similar feature maps may be packed spatially close to each other, for example within a tile. Furthermore, an intra block copy feature of the video encoder 1013 may be used to leverage their spatial correlation. Intra block copy (IBC) is a block matching technique, wherein a current prediction block is predicted from a reference block located in the already reconstructed regions of the same picture.

According to an example embodiment, extracted feature maps may be pre-processed before their placement onto an image or video frame by performing matrix decomposition on the feature maps. Matrix decomposition may be performed by any suitable method to decompose a feature map matrix, i.e. a two-dimensional array, into smaller arrays. This enables to reduce computational complexity, since processing of large feature map matrices may be avoided. The matrix decomposition may be performed by a feature pre-processor (not shown) between the feature extractor 1011 and feature adapter 1012.

According to an example embodiment, the VCM encoder 1010 may determine a difference between feature maps extracted from temporally near video frames, for example adjacent video frames. For example, the above mentioned feature pre-processor between the feature extractor 1011 and feature adapter 1012 may calculate differences between consecutive feature maps corresponding to consecutive video frames and provide thus obtained difference stream to the feature adapter 1012. This improves coding efficiency when the features are encoded by video encoder 1013.

In example embodiments where the feature maps are arranged adaptively, e.g. depending on one or more properties of the features such as the correlation between different feature maps, the decoder device 120, or the VCM decoder 1020, may be provided with signaling information indicating the way the feature maps have been organized into the image or the at least one video frame. This enables the VCM decoder 1020 to take the decoded data and correctly obtain the feature maps and correctly re-order them into the order expected by the machine(s) 130, for example task-NNs 1031 to 1034.

Therefore, according to an example embodiment, the VCM encoder 1010 may encode and/or transmit signaling data. The signaling data may be provided by the feature adapter 1012, which may generate the signaling data during packing of the feature maps. The signaling data may for example comprise an indication of the size of the at least one target tile. The signaling data may further comprise an indication of a packing order of the feature maps in the image or the at least one video frame. The packing order may be for example provided as list of feature map indexes in the target order, for example by assuming a certain reading order (e.g., a raster scan). For example, packing order [3,1,2,0] may indicate that the first read feature map in the reconstructed frame has index 3 in the target order, the second has index 1, the third has index 2, and the fourth has index 0.

According to an example embodiment, a subset of features may be packed into an image or at least one video frame, encoded, and delivered. This subset of feature maps may be determined based on an importance level of the feature maps, for example based on an L1 norm score. The signaling data may therefore comprise information indicating feature map indexes and their locations in the encoded data. This enables to avoid encoding of less important feature maps, or portions there of, which reduces required transmission or storage capacity.

For example, VCM encoder 1010 may determine a first subset of feature maps based on importance scores associated with the feature maps. The VCM encoder 1010 may further determine a second subset of the feature maps based on the importance scores. The importance scores of the first subset may be higher than the importance scores of the second subset. Even though in the present example there is one second subset, it is appreciated that the VCM encoder 1010 may alternatively determine more than one second subsets, where each second subset may be for example associated with a dedicated range of importance scores. The VCM encoder 1010 may determine an importance level of a feature map for example based on an L1 norm of a feature tensor. A feature map may be determined to belong to the first subset of feature maps if the L1 norm of the feature map exceeds a threshold.

The VCM encoder 1010 may encode the first subset of feature maps with at least one first coding parameter, which may be associated with a first quality level, and encode the at least one second subset of feature maps with at least one second coding parameter, which may be associated with at least one second quality level. The video encoder 1013 may for example encode tiles associated with the first subset of feature maps with the first coding parameter and/or encode tiles associated with the second subset of feature maps with the second coding parameter. The first quality level may be higher than the at least one second quality level. Therefore, feature maps with higher importance level may be encoded with higher quality, which improves the performance of the machine(s) 130 with respect to bitrate of the encoded bitstream.

Encoding quality level may be adjusted for example by adjusting value of at least one coding parameter. The coding parameter may for example comprise spatial resolution, in which case higher quality may be achieved based on encoding the packed image or video frames with higher spatial resolution, i.e., with higher amount of samples within a spatial region. A coding parameter may be also understood as a particular value of the coding parameter.

The VCM encoder 1010 may encode the first subset of the feature maps in a first bitstream and encode the second subset of feature maps in a second bitstream. Alternatively, the VCM encoder 1010 may pack the first subset of the feature maps and the at least one second subset of feature maps in the image or the at least one video frame, which may be encoded in a single bitstream.

The VCM encoder 1010 may further encode an indication of at least one first coding parameter for the first subset of feature maps. Similar information may be provided for other feature maps of the first or second subsets. In case of downsampling a subset of feature maps, e.g. based on their importance scores, the VCM decoder 1020 may resample the feature maps into their original/target resolution, for example using the signaling data, which may comprise an indication of the resolution.

According to an example embodiment, the VCM encoder 1010 may not encode all extracted or otherwise obtained features. Therefore, the adaptation of the feature maps at feature adapter 1012 may comprise packing a subset of the extracted or otherwise obtained feature maps into an the image or the at least one video frame. The subset of the feature maps to be delivered to the VCM decoder 1020 may be determined based on importance scores associated with the feature maps. The importance level may be determined as described above, for example based on L1 norm. The feature maps not included in the subset may be discarded.

According to an example embodiment, the feature adapter 1012 may comprise a projection neural network. The projection neural network may be pre-trained and configured to project the extracted features to obtain a plurality of projected feature tensors, which are more suitable for encoding by video encoder 1013. The set of adapted features output by the feature adapter 1012 may therefore comprise the projected feature tensors. For example, for each image or video frame, instead of packing the feature maps from the feature tensor into an image or video frame, the projection neural network may project an extracted feature tensor of shape (num_channels, H_feat, W_feat) to a projected tensor of shape (3, H_feat_proj, W_feat_proj), which is more suitable for being processed by a video codec. Here, H_feat and W_feat refer to the original number of rows and columns of each feature map, num_channels is the number of feature maps, H_feat_proj and W_feat_proj are the new number of rows and columns of each feature map, that is, the projected feature tensor. Projected feature tensors may be then encoded with the video encoder 1013.

The projection neural network may be trained by using a surrogate (i.e., proxy) neural network which simulates the video codec, so that it's possible to back-propagate gradients from the task-NNs to the projection neural network while still considering the coding artifacts of the video codec. For example, the projection neural network may be trained based on a loss function comprising an output of at least one task neural network, which may be configured to perform a task based on the encoded projected feature tensors. Training of the projection neural network may comprise backpropagating gradients of the loss function through the surrogate neural network.

According to an example embodiment, task performance based distortion metrics may be used to perform rate-distortion optimization (RDO) 1014 at video encoder 1013. In general, video codecs may perform rate-distortion optimization in order to decide the coding tools and other properties of the encoding process. The distortion metrics may comprise a pixel-wise distortion, such as MSE, or the like. As quality of video coding for machines is mainly characterized by the task performance, the at least one of the following distortion metrics may be used to perform rate-distortion optimization when encoding data for use by machines: a performance metric of at least one task neural network, at least one training loss of the at least one task neural network, or a feature reconstruction quality metric. Also, any combination of these metrics may be used as a distortion metric for RDO 1014. The feature reconstruction quality metric may be determined based on the set of adapted features output by feature adapter 1012 and a set of reconstructed features corresponding to the set of adapted features, for example based on a difference, such as MSE, between the adapted features and the reconstructed features. To enable this, the VCM encoder 1010 may further comprise a video decoder to reconstruct the encoded set of adapted features.

Test models for video codecs may perform RDO based on blocks of video frames. However, obtaining a task-NN's performance, for example the actual performance or a differentiable loss, may not be possible in all cases if only a block is considered. For example, it may not be possible to perform object detection based on a block of image if the block does not include necessary features of the object, even if the quality of the reconstructed block were high. Therefore, the original (uncompressed) block of image or video frame may be replaced with the reconstructed block in the original (uncompressed) image or video frame. The modified image or video frame may be then input to the relevant task-NN to evaluate performance of the task-NN with the modified image or video frame. To enable this, the VCM encoder 1010 may further comprise a copy of the relevant task-NN, or a task-NN that approximates the relevant task-NN of the decoder device 120. The VCM encoder 1010 may therefore determine the performance metric of the at least one task neural network based on replacing a block of the input data with a reconstructed block of data and evaluating performance of the at least one task neural network. The distortion metric may comprise or be determined based on an error measure of the output of the task-NN, such for example a negative classification accuracy or the cross-entropy. Alternatively, the distortion metric may comprise a delta distortion, for example a difference between distortions of the task-NN when the task is performed with the original image or video frame and when the task is performed with the reconstructed image or video frame. The latter represents a drop in task-NN performance.

According to an example embodiment, the distortion metric may be determined based on replacing a block within an area that is known or estimated to impact the task-NN performance. For example, in case of an object detector task-NN, the replacement may be done within area(s) where there are objects detected by the task-NN on the uncompressed data. Therefore, the VCM encoder 1010 may perform inference of the at least one task-NN on the input data. The replaced block of the input data may be then determined based on output of the task-NN, when performing inference of the task-NN with the input data, for example based on a location of a detected object.

According to an example embodiment, methods for selecting the layer of the FX-NN, from which the feature maps may be extracted, are disclosed. It is noted that this example embodiment is not limited to situations where an algorithmic video codec is used. Instead, the layer selection approaches disclosed herein may be applied when coding extracted features with other type of codecs, including for example a neural video encoder and/or a neural video decoder.

The FX-NN may comprise or be based on an auto-encoder neural network, for example auto-encoder 600, which may have a plurality of lateral skip connections between the encoder network 611 and the decoder network 621. The feature maps may be extracted based on an output of a first layer with a skip connection in an order of auto-encoder layers. The auto-encoder 600 may comprise *N* layers at the encoder network 611 and corresponding layers at the decoder network 621. The layers may be ordered from 1 to *N*, where the input data is processed in the order 1 to *N* at the encoder part. However, the decoder part may process the layers in the opposite order, that is, from layer *N* to layer 1. In the example of FIG. 6, the first skip connection is at layer *K.* Therefore, layer *K* may be considered as the first layer with a skip connection and the features may be extracted from layer *K.* In other words the features may be extracted from a first layer with a skip connection counting from the input of the auto-encoder. This enables to encode features extracted from a single layer, which reduces the required bitrate. For example, if there's a skip connection from layer 2 to layer 4, it may not be possible for a subsequent video encoder to encode just the features from layer 3, because the layer 4 gets input from both layer 3 (previous layer) and layer 2 (via the skip connection). In this example, the encoder would encode also features from layer 2, which would increase the required bitrate.

The FX-NN may alternatively comprise neural network with a DenseNet style architecture, for example the dense convolutional neural network 700. In this case, the features may be extracted from a layer at the end of a dense block, for example a layer whose output features are not by-passed by a skip connection. For example, the features may be extracted from layer 703 since the output of layer 703 is provided to a subsequent layer 704 and not provided by a skip connection to further layers 705, 706. Similar to the example of auto-encoder 600, this enables to reduce the required bitrate when encoding the extracted features.

FIG. 12 illustrates an example of video decoder 1020 for machines, according to an example embodiment. The VCM decoder 1020 may comprise a video decoder 1021 for decoding encoded video data comprising the adapted and encoded features provided by VCM encoder 1010. The video decoder 1021 may comprise an algorithmic video decoder such as video decoder 900. As discussed above, instead of an algorithmic video decoder, the video decoder 1021 may comprise any other type of decoder, for example neural video decoder such as for example the decoder network 621 of the auto-encoder 600.

The video decoder 1021 may receive or otherwise obtain, for example from a memory, an encoded set of features, which may correspond to the input data of the VCM encoder 1010. The video decoder 1021 may decode the encoded set of features to obtain a plurality of reconstructed feature maps. The reconstructed feature maps may be output to feature adapter 1022. The VCM decoder 1020 may further cause execution of at least one task-NN based on the reconstructed feature maps. The VCM decoder 1020 may comprise the at least one task-NN and therefore execute the task-NN itself. Alternatively, the VCM decoder 1020 may transmit the reconstructed features for execution of the task-NN at another device or entity. The VCM decoder 1020 may for example transmit a request for executing a task-NN with the reconstructed features. The request may comprise an identifier of the task-NN to be executed and/or the reconstructed features.

It is noted that the task-NN(s) may be executed based on the reconstructed features directly, that is, without applying the feature adapter 1022. For example, the task-NN(s) may have been trained or otherwise adapted to operate on the adapted features rather than the originally extracted features. However, alternatively the reconstructed features may be adapted by feature adapter 1022, as will be further discussed below.

The feature adapter 1022 may be configured to compensate for the operations of the feature adapter 1012 of the VCM encoder 1010. For example, the feature adapter 1022 may extract and re-order packed feature maps from an image or at least one video frame, or perform re-projection of reconstructed feature maps in their original format, for example based on the signaling data provided by the VCM encoder 1010. The signaling data may be included in the encoded video stream or file, and provided to feature adapter 1022 by video decoder 1021. Alternatively, the signaling data may be provided separate from the encoded video stream or file and provided to feature adapter 1022.

According to an example embodiment, the feature adapter 1022 may receive an indication associated with a packing order of a plurality of feature maps at an image or at least one video frame. The feature adapter 1022 may then perform re-ordering of the reconstructed feature maps based on the indication associated with their packing order.

The reconstructed data may comprise an image or at least one video frame, where the feature maps are included in tile(s) of the image or video frame(s). For example, a first feature map may be located in at least one tile. The feature adapter 1022 may receive an indication of the size of the first feature map. The feature adapter 1022 may then discard padding data included in the at least one tile based on the indication of the size of the first feature map. Additionally, the VCM encoder 1010 may provide an indication of a location of the feature map within the tile. The feature adapter 1022 may discard the padding data based on the indicated location of the feature map within the tile.

According to an example embodiment, the video decoder 1021 may receive or decode an indication of at least one first coding parameter associated with a first subset of the plurality of feature maps. This enables different subsets of feature maps to be decoded at different qualities, for example at different resolutions. Alternatively, the indicated coding parameter may be associated with the tile to which the particular feature map is packed. The feature adapter 1022 may further receive an indication of at least one second coding parameter associated with at least one second subset of the feature maps, or tiles. The at least one first coding parameter may be associated with a first quality level and the at least one second coding parameter may be associated with at least one second quality level. The first quality level may be higher than the at least one second quality level.

In response to receiving the indication(s), the video decoder 1021 may decode the tiles associated with the indicated feature maps, or, feature maps associated with indicated tiles with respective coding parameters and qualities. For example, the first subset of feature maps or tiles may be decoded based on the at least one first coding parameter. The at least one second subset of feature maps or tiles may be decoded based on the at least one second coding parameter.

The video decoder 1021 may receive the first subset of the plurality of feature maps in a first bitstream and receive the second subset of the plurality of feature maps in a second bitstream. The first and second subsets may be also included in separate video files. Alternatively, the video decoder 1021 may receive a bitstream comprising both the first subset of feature maps and the at least one second subset of feature maps packed in the image or the at least one video frame.

When the feature adapter 1012 of the VCM encoder 1010 includes a projection neural network, the feature adapter 1022 of the VCM decoder 1020 may comprise a corresponding re-projection network to compensate for the adaptation of the extracted features. Therefore, the re-projection neural network may be configured to re-project the plurality of reconstructed feature maps to obtain at least one re-projected feature tensor. For example, the re-projection neural network may re-project a projected feature tensor of shape (3, H_feat_proj, W_feat_proj), which was suitable for decoding by video decoder 1021, into a re-projected feature tensor having the original shape (num_channels, H_feat, W_feat). The task-NN(s) may be then executed based on the re-projected feature tensor. This enables the task-NN(s) to be executed without any modification due to the projection at VCM encoder 1010.

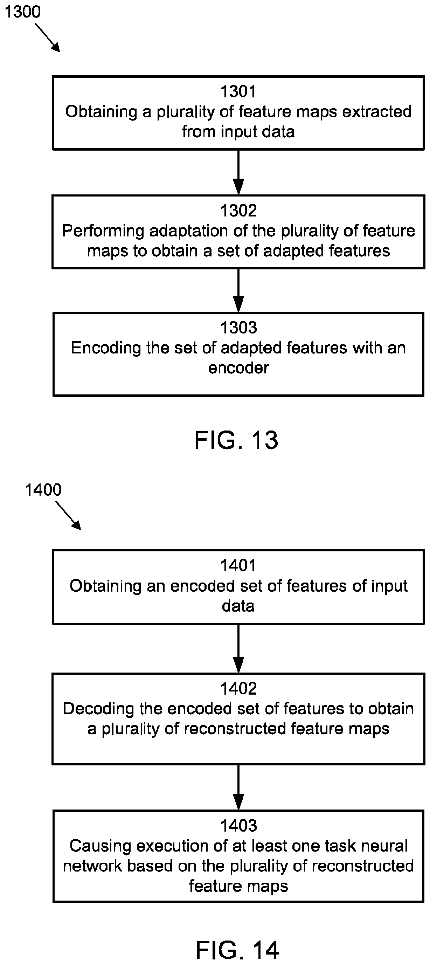

FIG. 13 illustrates an example of a method 1300 for data encoding, according to an example embodiment.

At 1301, the method may comprise obtaining a plurality of feature maps extracted from input data.

At 1302, the method may comprise performing adaptation of the plurality of feature maps to obtain a set of adapted features.

At 1303, the method may comprise encoding the set of adapted features with an encoder.

According to an example embodiment, the input data may comprise image data or video data. The adaptation of the plurality of feature maps may comprise packing the plurality of feature maps into an image or at least one video frame. The set of adapted features may comprise the image or the at least one video frame.

According to an example embodiment, at least a first feature map of the plurality of feature maps may be packed to at least one target tile of the image or the at least one video frame. The size of the at least one target tile may be equal to a coding tree unit size of the encoder.

According to an example embodiment, the method may further comprise inserting padding data to the at least one target tile, if a size of the first feature map is smaller than the size of the at least one target tile.

According to an example embodiment, the method may further comprise determining a spatial and/or temporal location of the at least one target tile within the image or the at least one video frame based on correlation between the first feature map and at least one second feature map of the plurality of feature maps.

According to an example embodiment, the method may further comprise determining the spatial and/or temporal location of the at least one target tile within the image or the at least one video frame based on rate-distortion metrics for a plurality of candidate target tile combinations for the plurality of feature maps.

According to an example embodiment, the method may further comprise determining a first subset of the first feature map. The method may further comprise packing the first subset of the first feature map spatially or temporally adjacent to at least one second subset of the at least one second feature map. The first subset of the first feature map and the at least one second subset of the at least one second feature map may be associated with a same location within the first feature map and the at least one second feature map.

According to an example embodiment, the method may further comprise encoding an indication of a size of the at least one target tile, and/or encoding an indication of a packing order of the plurality of feature maps in the image or at least one video frame.

According to an example embodiment, the method may further comprise determining a first subset of the plurality of feature maps based on a plurality of importance scores associated with the plurality of feature maps. The method may further comprise determining at least one second subset of the plurality of feature maps based on the plurality of importance scores. Importance scores of the first subset of the plurality of feature maps may be higher than importance scores of the at least one second subset of the plurality of feature maps. The method may further comprise encoding the first subset of the plurality of feature maps with at least one first coding parameter associated with a first quality level and encode the at least one second subset of the plurality of feature maps with at least one second coding parameter associated with a at least one second quality level. The first quality level may be higher than the at least one second quality level.

According to an example embodiment, the method may further comprise encoding the first subset of the plurality of feature maps in a first bitstream. The method may further comprise encoding the second subset of the plurality of feature maps in a second bitstream. The first bitstream may be separate from the second bitstream.

According to an example embodiment, the method may further comprise packing the first subset of the plurality of feature maps and the at least one second subset of the plurality of feature maps in the image or the at least one video frame. The image or the at least one video frame may be included in a (single) bitstream.

According to an example embodiment, the method may further comprise encoding an indication of the at least one first coding parameter for a first subset of the plurality of feature maps, and/or encoding an indication of the at least one second coding parameter for the at least one second subset of the plurality of feature maps.

According to an example embodiment, the encoder may comprise a video encoder. The adaptation of the plurality of feature maps may comprise determining a difference between feature maps extracted from temporally adjacent video frames.

According to an example embodiment, the input data may comprise image data or video data. The adaptation of the plurality of feature maps may comprise packing a subset of the plurality of feature maps into an image or at least one video frame. The subset of the plurality of feature maps may be determined based on a plurality of importance scores of the plurality of feature maps.

According to an example embodiment, the plurality of importance scores may comprise L1 norms of the plurality of feature maps.

According to an example embodiment, the adaptation of the plurality of feature maps may comprise projecting, for example with a projection neural network, the plurality of feature maps to obtain a plurality of projected feature tensors. The set of adapted features may comprise the plurality of projected feature tensors.

According to an example embodiment, the method may further comprise encoding the plurality of projected feature tensors with a video encoder.

According to an example embodiment, the method may further comprise training the projection neural network based on a loss function comprising an output of at least one task neural network configured to perform a task based on the encoded set of adapted features. The training may comprise backpropagating gradients of the loss function through a surrogate neural network configured to emulate the video encoder.

According to an example embodiment, the encoder may comprise a video encoder configured to perform rate-distortion adaptation for the set of adapted features based on at least one of: a performance metric of the at least one task neural network; at least one training loss of the at least one task neural network; a feature reconstruction quality metric. The feature reconstruction quality metric may be determined based on the set of adapted features and a set of reconstructed features corresponding to the set of adapted features.

According to an example embodiment, the method may further comprise determining the performance metric of the at least one task neural network based on replacing a block of the input data with a reconstructed block of data and evaluating performance of the at least one neural network.

According to an example embodiment, the method may further comprise performing inference of the at least one task neural network on the input data. The method may further comprise determining the block of the input data based on an output of the at least one task neural network, when performing inference of the at least one task neural network with the input data.

According to an example embodiment, the method may further comprise obtaining the plurality of feature maps based on extracting the plurality of feature maps from input data by a feature extraction neural network.

According to an example embodiment, the feature extraction neural network may comprise an auto-encoder neural network with a plurality of lateral skip connections. The method may further comprise extracting the plurality of feature maps based on an output of a first layer with a lateral skip connection in an order of auto-encoder layers.

According to an example embodiment, the feature extraction neural network comprises a dense convolutional neural network. The method may further comprise extracting the plurality of feature maps based on an output of a dense block of layers, wherein the output of the dense block of layers is provided to a subsequent layer of the dense convolutional neural network and is not provided by a skip connection to further subsequent layers of the dense convolutional neural network.

FIG. 14 illustrates an example of a method 1400 for data decoding, according to an example embodiment.

At 1401, the method may comprise obtaining an encoded set of features of input data.

At 1402, the method may comprise decoding the encoded set of features to obtain a plurality of reconstructed feature maps.

At 1403, the method may comprise causing execution of at least one task neural network based on the plurality of reconstructed feature maps.

According to an example embodiment, the input data may comprise image data or video data. The method may further comprise decoding an indication associated with a packing order of a plurality of feature maps at an image or at least one video frame. The method may further comprise performing re-ordering of the plurality of reconstructed feature maps based on the indication associated with the packing order.

According to an example embodiment, at least one tile of the image or the at least one video frame may comprise a first feature map of the plurality of feature maps. The size of the at least one tile may be equal to a coding tree unit size of a decoder.

According to an example embodiment, the method may further comprise decoding an indication of a size of the first feature map. The method may further comprise discarding padding data included in the at least one tile based on the indication of the size of the first feature map.

According to an example embodiment, the method may further comprise decoding an indication of at least one first coding parameter associated with a first subset of the plurality of feature maps. The method may further comprise decoding an indication of at least one second coding parameter associated with the at least one second subset of the plurality of feature maps. The at least one first coding parameter may be associated with a first quality level and the at least one second coding parameter may be associated with at least one second quality level. The first quality level may be higher than the at least one second quality level.

According to an example embodiment, the method may further comprise decoding the first subset of the plurality of feature maps based on the at least one first coding parameter. The method may further comprise decoding the at least one second subset of the plurality of feature maps based on the at least one second coding parameter.

According to an example embodiment, the method may further comprise receiving the first subset of the plurality of feature maps in a first bitstream. The method may further comprise receiving the second subset of the plurality of feature maps in a second bitstream.

According to an example embodiment, the method may further comprise receiving a bitstream comprising the first subset of the plurality of feature maps and the at least one second subset of the plurality of feature maps packed in the image or the at least one video frame.

According to an example embodiment, the method may further comprise re-projecting, for example with a re-projection neural network, the plurality of reconstructed feature maps to obtain at least one re-projected feature tensor. The method may further comprise causing the execution of the at least one task neural network based on the at least one re-projected feature tensor.

According to an example embodiment, the method may further comprise decoding the encoded set of features with a video decoder.

Further features of the methods directly result from the functionalities and parameters of the encoder device 110, the decoder device 120, the VCM encoder 1010, the VCM decoder 1020, the machine(s) 130, and/or the task neural network(s) 1031 to 1034, as described in the appended claims and throughout the specification. It is noted that one or more steps of the methods may be performed in different order.

An apparatus, for example encoder device 110, decoder device 120, or a combination thereof, may be configured to perform or cause performance of any aspect of the method(s) described herein. Further, a computer program may comprise instructions for causing, when executed, an apparatus to perform any aspect of the method(s) described herein. Further, a computer program may be configured to, when executed, to cause an apparatus at least to perform any aspect of the method(s) described herein. Further, a computer program product or a computer readable medium may comprise program instructions for causing an apparatus to perform any aspect of the method(s) described herein. Further, an apparatus may comprise means for performing any aspect of the method(s) described herein. According to an example embodiment, the means comprises the at least one processor, and the at least one memory including program code, the at one memory and the program code configured to, with the at least one processor, cause the apparatus at least to perform any aspect of the method(s).

Any range or device value given herein may be extended or altered without losing the effect sought. Also, any example embodiment may be combined with another example embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items. Furthermore, references to 'at least one' item or 'one or more' items may refer to one or a plurality of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus, comprising means for:
obtaining a plurality of feature maps extracted from input data;
performing adaptation of the plurality of feature maps to obtain a set of adapted features; and
encoding the set of adapted features with an encoder.

2. The apparatus according to claim 1, wherein the input data comprises image data or video data, and wherein the means for performing adaptation of the plurality of feature maps comprises means for packing the plurality of feature maps into an image or at least one video frame, and wherein the set of adapted features comprises the image or the at least one video frame.

3. The apparatus according to claim 2, wherein at least a first feature map of the plurality of feature maps is packed to at least one target tile of the image or the at least one video frame, and wherein a size of the at least one target tile is equal to a coding tree unit size of the encoder.

4. The apparatus according to claim 3, further comprising means for:
determining a spatial and/or temporal location of the at least one target tile within the image or the at least one video frame based on correlation between the first feature map and at least one second feature map of the plurality of feature maps.

5. The apparatus according to claim 4, further comprising means for:
determining the spatial and/or temporal location of the at least one target tile within the image or the at least one video frame based on rate-distortion metrics for a plurality of candidate target tile combinations for the plurality of feature maps.

6. The apparatus according to any of claims 3 to 5, further comprising means for:
encoding an indication of a size of the at least one target tile, and/or
encoding an indication of a packing order of the plurality of feature maps in the image or at least one video frame.

7. The apparatus according to claim 1, wherein the means for performing adaptation of the plurality of feature maps comprises means for projecting, with a projection neural network, the plurality of feature maps to obtain a plurality of projected feature tensors, and wherein the set of adapted features comprises the plurality of projected feature tensors.

8. The apparatus according to claim 7, further comprising means for:
encoding the plurality of projected feature tensors with a video encoder;
training the projection neural network based on a loss function comprising an output of at least one task neural network configured to perform a task based on the encoded set of adapted features, wherein the means for training comprises means for backpropagating gradients of the loss function through a surrogate neural network configured to emulate the video encoder.

9. The apparatus according to any preceding claim, further comprising means for:
obtaining the plurality of feature maps based on extracting the plurality of feature maps from input data by a feature extraction neural network, wherein the feature extraction neural network comprises an auto-encoder neural network with a plurality of lateral skip connections or a dense convolutional neural network comprising a dense block of layers, and further comprising means for:
extracting the plurality of feature maps based on an output of a first layer with a lateral skip connection in an order of auto-encoder layers, or
extracting the plurality of feature maps based on an output of the dense block of layers, wherein the output of the dense block of layers is provided to a subsequent layer of the dense convolutional neural network and is not provided by a skip connection to further subsequent layers of the dense convolutional neural network.

10. An apparatus, comprising means for:
obtaining an encoded set of features of input data;
decoding the encoded set of features to obtain a plurality of reconstructed feature maps; and
causing execution of at least one task neural network based on the plurality of reconstructed feature maps.

11. The apparatus according to claim 10, wherein the input data comprises image data or video data, and further comprising:
decoding an indication associated with a packing order of a plurality of feature maps at an image or at least one video frame; and
performing re-ordering of the plurality of reconstructed feature maps based on the indication associated with the packing order.

12. The apparatus according to claim 11, wherein at least one tile of the image or the at least one video frame comprises at least a first feature map of the plurality of feature maps, and wherein a size of the at least one tile is equal to a coding tree unit size of a decoder.

13. The apparatus according to claim 10, further comprising means for:
re-projecting, with a re-projection neural network, the plurality of reconstructed feature maps to obtain at least one re-projected feature tensor; and
causing the execution of the at least one task neural network based on the at least one re-projected feature tensor.

14. A method, comprising:
obtaining a plurality of feature maps extracted from input data;
performing adaptation of the plurality of feature maps to obtain a set of adapted features; and
encoding the set of adapted features with an encoder.

15. The method according to claim 14, wherein the input data comprises image data or video data, and wherein performing adaptation of the plurality of feature maps comprises packing the plurality of feature maps into an image or at least one video frame, and wherein the set of adapted features comprises the image or the at least one video frame.
